# EUROPÄISCHE PATENTSCHRIFT

(11) **EP 1 026 019 B1**
(45) Veröffentlichungstag und Bekanntmachung des Hinweises auf die Patenterteilung: **10.09.2003**
(21) Anmeldenummer: 00101144.4
(22) Anmeldetag: 21.01.2000
(51) Int. Cl.: B60H 1/22

(54) **Fahrzeug-Formteil aus einem Verbundwerkstoff mit unidirektional angeordneten Kohlefasern**
Moulding element for a vehicle of composite material with unidirectionally arranged carbon fibre
Pièce moulée pour véhicule en matériau composite avec fibres de carbone disposées unidirectionellement

(30) Priorität: 02.02.1999 DE 19904076
(43) Veröffentlichungstag der Anmeldung: 09.08.2000
(73) Patentinhaber: Bayerische Motoren Werke Aktiengesellschaft, 80809 München (DE)
(72) Erfinder: Dömeland, Peter, 82205 Gilching (DE); Munding, Peter, 80638 München (DE)

(56) Entgegenhaltungen:
- DE-A- 4 221 454
- DE-A- 4 233 118
- FR-A- 2 756 253

## Beschreibung

Die Erfindung bezieht sich nach dem Oberbegriff des Patentanspruches 1 auf ein Fahrzeug-Formteil aus einem Verbundwerkstoff mit unidirektional angeordneten Kohlefasern, wobei gegeneinander isolierte Kohlefasem als elektrische Widerstands-Heizelemente einer Flächenheizeinrichtung dienen, wie z.B. bekannt aus DE 42 21 454.

Bekanntlich ist die thermische Behaglichkeit in Fahrzeugen u.a. von der Temperaturdifferenz zwischen der Raumluft und den Begrenzungswänden des Fahrzeuges bestimmt, wobei eine Temperaturdifferenz von ca. 4°C als akzeptabel angesehen wird. In der Warmlaufphase der Antriebsmaschine werden insbesondere bei abgekühltem Fahrzeug diese Werte über längere Zeit nicht erreicht. Die Temperierung der Innen-Begrenzungswände erfolgt in der Regel über die Fahrgastraumluft selbst, wobei die Zeit, die für die Aufheizung benötigt wird, hauptsächlich von der Größe der zur Verfügung stehenden Wärme und des Wärmeüberganges zwischen der Raumluft und der Fahrzeuginnenwand bestimmt wird. Die Größe des Wärmeflußes wird dabei von der Temperaturdifferenz zwischen Raumluft und Wand und dem Wärmeübergangskoeffizienten - d.h. Raumluftgeschwindigkeit und Turbulenz - bestimmt. Beides wird aber als unangenehm empfunden und wirkt sich nachteilig für das physiologische Wärmeempfinden aus. Dies bedeutet, daß eine schnelle Aufheizung der Begrenzungswände durch die Raumluft selbst nur mit einem thermischen Komfortverlust zu erreichen ist. Für das thermische Wohlbefinden ist deshalb eine Beheizung der kalten Begrenzungswände erstrebenswert. Heizeinrichtungen auf der Basis elektrischer Widerstandselemente oder fluidischer Träger-Systeme sind bei Kraftfahrzeugen für Sitze, Lenkrad, Spiegel und Scheiben bekannt.

Weiter ist aus der DE 25 18 071 A1 eine Strahlungsheizung für den Fahrgastraum eines Kraftfahrzeuges bekannt, wobei von Heiz- oder Kühlluft nicht durchströmbare Aufbauteile mit einem elektrisch heizbaren Widerstandslack versehen sind zur Abgabe von Wärmestrahlung. Nachteilig hierbei ist der damit verbundene Aufwand.

Ferner ist aus der DE 35 14 180 A1 eine Vorrichtung zur Reduzierung der relativen Luftfeuchtigkeit in Kraftfahrzeuginnenräumen bekannt, wobei in die Innenauskleidung elektrische Heizmattenteile integriert sind. Insbesondere sind die Heizmattenteile unterhalb eines Seitenfensters in einem zu diesem führenden Strömungskanal angeordnet.

Weiter ist aus der DE 40 19 447 C2 ein biegsames elektrisches Flächenheizelement bekannt, das insbesondere zur Erwärmung von Motorrad- und Autoreifen dient, und ein aus Kett- und Schußfäden bestehendes Glasfaser-Trägergewebe umfaßt, in dem als elektrische Heizleiter Kohlefasem eingewebt sind.

Zusätzlich ist aus der DE 42 33 118 A1 eine Heizmatte aus flexiblem Widerstandsmaterial für eine elektrische Sitzheizung eines Kraftfahrzeuges bekannt, die sich dadurch kennzeichnet, daß das flexible Widerstandsmaterial aus einem, aus Kohlenstoff-Fasern gebildeten Gewebe besteht, in das flexible Kontaktdrähte, welche die Elektroden darstellen, eingearbeitet sind.

Schließlich ist aus der DE 2 063 629 A1 und aus der DE 26 28 731 jeweils ein Kohlenfasem als elektrische Widerstands-Heizelemente umfassendes Formteil zur Verkleidung bzw. Beplankung eines Flugzeugflügels bekannt. Ein gattungsgemäßes Formteil zur Beplankung eines Rotorblattes eines Hubschraubers ist aus der DE 33 20 588 A1 bekannt.

Der Erfindung liegt die Aufgabe zugrunde, bei zur Verwendung im Innenraum eines Kraftfahrzeuges vorgesehenen Verbundwerkstoffen mit Kohlefasern eine einfache Anordnung einer Flächenheizeinrichtung aufzuzeigen.

Diese Aufgabe ist durch die Merkmale deskennzeichnenden Teils des Anspruchs 1 gelöst, indem das Formteil als tragendes Struktur-Teil oder als Verkleidungs-/Beplankungs-Teil eines Kraftfahrzeuges dient, wobei die Flächenheizeinrichtung im jeweiligen Teil mit entsprechend der Teil-Gestaltung angepaßt durchgehend verlaufend angeordneten Kohlefasem eine bedarfsbestimmte Begrenzung aufweist derart, daß die Begrenzung mittels die Kohlefasern zumindest in einer oberflächennahen Schicht querend angeordneten Stromleitern in einem bedarfsangepaßten gegenseitigen Abstand bei bedarfsangepaßter Länge der Stromleiter erzielt ist.

Der Vorteil der Erfindung liegt in der einfachen Verwirklichung einer Flächenheizeinrichtung für den Innenraum eines Kraftfahrzeuges, wobei in einem vorwiegend aus durchgehenden bzw. unidirektional angeordneten Kohlenfasern umfassenden Formteil die als Elektroden dienenden Stromleiter von bedarfsangepaßter Länge in einem bedarfsangepaßten gegenseitigen Abstand mit einer Schicht Kohlefasem vor dem Aushärten des Verbundwerkstoffes stromführend verbunden werden. Mit der Erfindung sind das jeweilige Formteil als Strukturteil oder als Verkleidungs- bzw. Beplankungsteil im wesentlichen aufbauende Kohlefasern zugleich als Widerstands-Heizelemente genutzt. Damit kann in vorteilhafter Weise in einem Fahrzeuginnenraum in dem Fahrzeuginsassen benachbarten Bereichen eine gewünschte Flächenheizeinrichtung auf einfache Weise ohne zusätzliche Mittel angeordnet werden. Derartige Flächenheizeinrichtungen nach der Erfindung lassen sich ferner in von Fensterflächen benachbarten Abschnitten des Fahrzeuginnenraumes vorsehen.

Bevorzugt ist die Flächenheizeinrichtung im Oberflächenbereich des eine Fensterbrüstung einer Kraftfahrzeug-Tür bedeckenden Verkleidungsteiles angeordnet. Ferner kann die erfindungsgemäße Flächenheizeinrichtung in einer an einem Außenabschnitt des Kraftfahrzeuges angeordneten Beplankung vorgesehen sein, vorzugsweise in einer Radhaus-Auskleidung zum Abschmelzen von angeworfenem Schnee oder Eis.

Die Erfindung ist anhand einer in der Zeichnung schematisch dargestellten Fahrzeugtür beschrieben. Es zeigt:

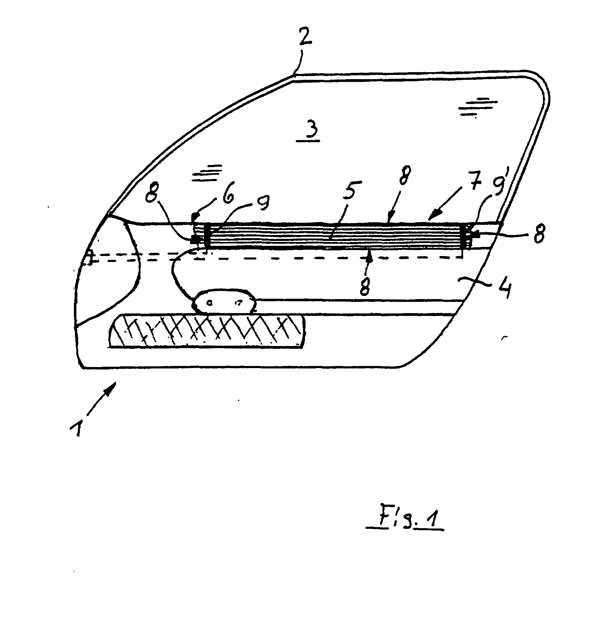

- Figur 1: eine Anordnung einer Flächenheizeinrichtung an einem Verkleidungsteil einer Kfz-Tür,
- Figur 2: weitere Anordnungen einer Flächenheizeinrichtung an einer Karosserie-Struktur aus einem Verbundwerkstoff.

Eine Seitentür 1 für ein nicht dargestelltes Kraftfahrzeug, insbesondere PKW, umfaßt einen Rahmen 2 für eine Fensterscheibe 3. Die Seitentür 1 ist mit einem Verkleidungs-Teil 4 ausgerüstet, das als Formteil aus einem Verbundwerkstoff mit unidirektional bzw. gleichgerichtet angeordneten Kohlenfasern 5 gebildet ist. Die beispielsweise im Bereich der Türbrüstung 6 entsprechend der Gestaltung des Verkleidungsteiles 4 angepaßt durchgehend verlaufend angeordneten Kohlenfasem 5 dienen als elektrische Widerstands-Heizelemente für eine Flächenheizeinrichtung 7. Die Flächenheizeinrichtung 7 mit den im Verbundwerkstoff gegeneinander isolierten Kohlefasem 5 weist erfindungsgemäß bedarfsbestimmte Begrenzungen 8 auf derart, daß die Begrenzungen 8 mittels die Kohlefasem 5 zumindest in einer oberflächennahen Schicht querend angeordneten Stromleitern 9, 9' in einem bedarfsangepaßten gegenseitigen Abstand bei bedarfsangepaßter Länge der Stromleiter 9, 9' erzielt ist.

Mit der Erfindung ist in vorteilhafter Weise in einem einen Fahrzeuginsassen sowie einem Fenster 3 benachbarten Oberflächenbereich des Verkleidungs-Teiles 4 eine Flächenheizeinrichtung 7 erzielt. Für die Ausbildung der Flächenheizeinrichtung 7 weiter vorteilhaft ist, daß die im Verbundwerkstoff des Formteiles für dessen Gestalt und Festigkeit dienenden Kohlenfasern 5 zugleich als elektrische Widerstands-Heizelemente dienen. Bei einer Seitentür 1 mit einer Innenbeplankung als Strukturteil ohne Verkleidung kann die Flächenheizeinrichtung 7 unmittelbar in der angeformten Türbrüstung 6 oberflächennah vorgesehen sein.

Weiter kann eine erfindungsgemäße Flächenheizeinrichtung 7 auch in Oberflächenbereichen von Struktur- oder Verkleidungsteilen im Bereich weiterer, insbesondere fest in der Karosserie angeordneter Fensterscheiben vorgesehen sein, um beispielsweise eine Beschlagung der Scheiben zu vermeiden.

Im Rahmen der Erfindung kann die erfindungsgemäße Flächenheizeinrichtung auch in einer an einem Außenabschnitt des Kraftfahrzeuges angeordneten Beplankung vorgesehen sein, vorzugsweise in einer Radhaus-Auskleidung, um bei tiefer Temperatur einen Schnee- und/oder Eisbelag zu entfernen.

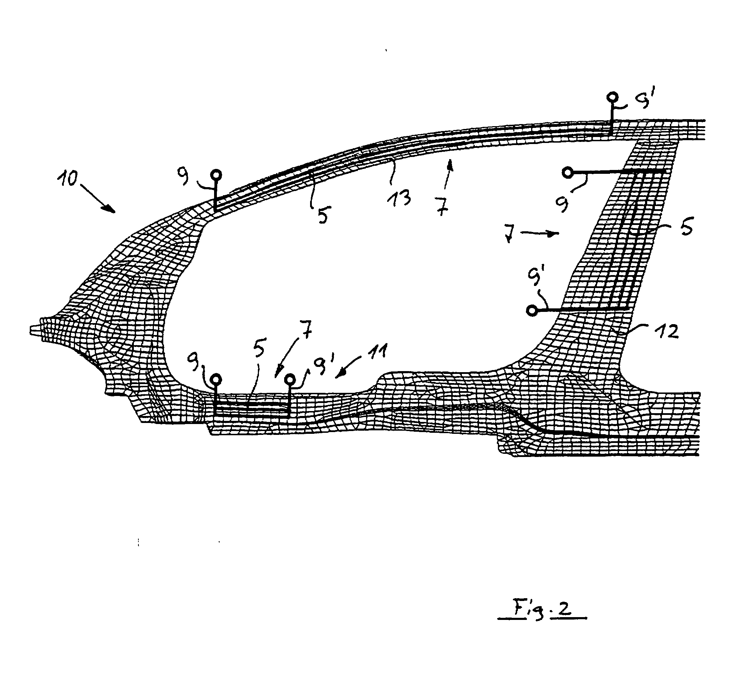

Figur 2 zeigt eine nach FE-Verfahren gestaltete Karosserie-Struktur 10, die aus einem Kohlefaser-Verbundwerkstoff gebildet ist. Mit 5 sind hier die lediglich schematisch dargestellten, als Heizwiderstände dienenden Kohlefasern bezeichnet für weitere Anordnungen einer jeweiligen Flächenheizeinrichtung 7. Bevorzugt sind diese einzeln oder kombiniert im Fußraum 11, an der B-Säule 12 und/oder an der oberen Türbegrenzung 13 im Dachbereich vorgesehen. Jeder Flächenheizeinrichtung 7 kann eine nach außen wirksame Dämm-Matte unterlegt sein (nicht gezeigt).

## Patentansprüche

1. Fahrzeug-Formteil aus einem Verbundwerkstoff mit unidirektional angeordneten Kohlefasern,
- wobei gegeneinander isolierte Kohlefasern (5) als elektrische Widerstands-Heizelemente einer Flächenheizeinrichtung (7) dienen,
**dadurch gekennzeichnet,**
- **daß** das Formteil als tragendes Struktur-Teil oder als Verkleidungs-/Beplankungs-Teil (4) eines Kraftfahrzeuges dient, wobei
- die Flächenheizeinrichtung (7) im jeweiligen Teil (4) mit entsprechend der Teil-Gestaltung angepaßt durchgehend verlaufend angeordneten Kohlefasern (5) bedarfsbestimmte Begrenzungen (8) aufweist, wobei
- die Begrenzungen (8) mittels der die Kohlefasern (5) zumindest in einer oberflächennahen Schicht querend angeordneten Stromleiter (9, 9') in einem bedarfsangepaßten gegenseitigen Abstand bei bedarfsangepaßter Länge der Stromleiter (9, 9') erzielt werden.

2. Formteil nach Anspruch 1, **dadurch gekennzeichnet, daß** die Flächenheizeinrichtung (7) in einem einem Fahrzeuginsassen und/oder einem Fensterabschnitt (3) benachbarten Oberflächenbereich des Struktur- oder Verkleidungs-Teiles (4) angeordnet ist.

3. Formteil nach Anspruch 1 und 2, **dadurch gekennzeichnet, daß** die Flächenheizeinrichtung (7) im Oberflächenbereich des eine Türbrüstung (6) einer Kraftfahrzeug-Tür (1) bedeckenden Verkleidungs-Teiles (4) angeordnet ist.

4. Formteil nach Anspruch 1, **dadurch gekennzeichnet, daß** die Flächenheizeinrichtung in einer an einem Außenabschnitt des Kraftfahrzeuges angeordneten Beplankung vorgesehen ist, insbesondere Radhaus-Auskleidung.

5. Formteil nach Anspruch 1 und 2, **dadurch gekennzeichnet, daß** die Flächenheizeinrichtung (7) im Oberflächenbereich einer Karosserie-Struktur (10) im Fußraum (11) und/oder an einer B-Säule (12) und/oder an einer oberen Türbegrenzung (13) angeordnet ist.

## Claims

1. A moulded part of a vehicle, made of a composite material comprising unidirectionally disposed carbon fibres,
- wherein carbon fibres (5) insulated from one another serve as electric resistance heating elements in a concealed heater (7),
**characterised in that**
- the moulded part is a load-bearing structural part or a part (4) of the covering or skin of a motor vehicle, wherein
- the concealed heater (7) in the respective part (4) has boundaries (8) determined as required by continuous carbon fibres (5) adapted to the shape of the part, wherein
- the boundaries (8) are made up of conductors (9, 9') disposed at least in a layer near the surface and crossing the carbon fibres (5), the conductors (9, 9') being suitably spaced and of suitable length.

2. A moulded part according to claim 1, **characterised in that** the concealed heater (7) is disposed in a surface region of the structural or covering part (4) near an occupant and/or near a window portion (3).

3. A moulded part according to claims 1 and 2, **characterised in that** the concealed heater (7) is disposed in the surface region of a covering part (4) over a breast (6) of a vehicle door (1).

4. A moulded part according to claim 1, **characterised in that** the concealed heater is provided in a skin, especially a wheel-house covering, disposed on an outer portion of the vehicle.

5. A moulded part according to claims 1 and 2, **characterised in that** the concealed heater (7) is disposed in the surface region of a body structure (10) in the foot space (11) and/or on a B-column (12) and/or on an upper door boundary (13).

## Revendications

1. Pièce moulée de véhicule, en un matériau composite avec des fibres de carbone disposées unidirectionnellement,
- des fibres de carbone (5) isolées les unes des autres servant d'éléments chauffants par résistance d'une installation chauffante en surface (7),
**caractérisée en ce que**
- la pièce moulée sert de pièce de structure porteuse ou de pièce de revêtement/garniture (4) d'un véhicule automobile,
- l'installation chauffante en surface (7) comporte dans chaque pièce (4) des limites (8) adaptées aux besoins avec des fibres de carbone (5) disposées de façon à s'étendre en continu en étant ajustées en fonction de la structure de forme,
- les limites (8) étant obtenues à l'aide des conducteurs de courant (9, 9'), disposés de façon à croiser les fibres de carbone (5) au moins dans une couche proche de la surface, selon une distance mutuelle adaptée aux besoins pour une longueur adaptée aux besoins des conducteurs (9, 9').

2. Pièce moulée selon la revendication 1,
**caractérisée en ce que**
l'installation chauffante en surface (7) est disposée dans une zone de surface de la pièce de structure ou de revêtement (4) voisine d'un occupant du véhicule et/ou d'un segment de fenêtre (3).

3. Pièce moulée selon la revendication 1 ou 2,
**caractérisée en ce que**
l'installation chauffante en surface (7) est disposée dans la zone de surface de la partie de revêtement (4) qui recouvre un appui de portière (6) d'une portière de véhicule (1).

4. Pièce moulée selon la revendication 1,
**caractérisée en ce que**
l'installation chauffante en surface est prévue dans un revêtement placé sur un segment extérieur du véhicule automobile, en particulier la garniture du logement de roue.

5. Pièce moulée selon la revendication 1 ou 2,
**caractérisée en ce que**
l'installation chauffante en surface (7) est disposée dans la zone de surface d'une structure de carrosserie (10) dans le plancher (11) et/ou sur une colonne B (12) et/ou sur une limite supérieure de portière (13).
